# EUROPEAN PATENT APPLICATION

(11) **EP 4 773 343 A2**
(43) Date of publication of application: **08.07.2026**
(21) Application number: 25225120.2
(22) Date of filing: 18.12.2025
(51) Int. Cl.: H01M 10/613, H01M 10/617, H01M 10/647, H01M 10/651, H01M 10/6555, H01M 10/6567, H01M 50/289, H01M 10/6551, H01M 10/6556

(54) **IMMERSION COOLING MODULE, COOLING METHOD, AND USE OF SAID IMMERSION COOLING MODULE**

(30) Priority: 06.01.2025 KR 20250001760
(71) Applicant: SK Innovation Co., Ltd., Seoul 03188 (KR); SK On Co., Ltd., Seoul 03161 (KR)
(72) Inventor: JUNG, In Sik, 34124 Daejeon (KR); MIN, Gi Hong, 34124 Daejeon (KR)
(74) Representative: Prüfer & Partner mbB Patentanwälte · Rechtsanwälte

(57) **Abstract**

Proposed is an immersion cooling module including a housing (10) in which an inlet (11) for cooling fluid to flow in and an outlet (12) for cooling fluid to flow out are formed, and in which the cooling fluid is accommodated at a predetermined level so as to form an upper space, a cooling chamber (20) coupled to a lower end of the housing (10), and configured to have a chamber inlet (21) through which the cooling fluid flows in and a chamber outlet (22) through which the cooling fluid is discharged, battery cells spaced apart from each other and immersed in the cooling fluid, and cooling fluid passage parts respectively formed in cooling spaces divided by the battery cells, wherein heat transfer members are arranged at predetermined intervals in a direction perpendicular to a flow direction of the cooling fluid.

## Description

### Technical Field

The present disclosure relates to an immersion cooling module. The present disclosure further relates to a cooling method and to a use of said immersion cooling module.

### Description of the Related Art

In recent years, as mobile devices such as mobile phones and laptops have become smaller and lighter, and electric vehicles and hybrid vehicles demand high-capacity power sources, a variety of batteries are being developed and used.

In the case of secondary batteries, efficiency is becoming increasingly important depending on the application field, but problems such as heat generation and fires during charging or operation occur due to the external factors.

Accordingly, technologies are being developed to increase the operating efficiency of secondary batteries and ensure safety. Moreover, a recent surge in electricity usage has led to increased carbon emissions and exacerbated global warming concerns, which has called for more efficient device operation mechanisms, and improved cooling methods and maximization of cooling efficiency therefor.

### Document of Related Art

(Patent Document 1) Korean Patent No. 10-2560884

### SUMMARY

According to an aspect of the present disclosure, provided is an immersion cooling module that mitigates the decrease in cooling efficiency of a cooling fluid during the flow of the cooling fluid within a housing, thereby maximizing the cooling efficiency of a battery cell by the cooling fluid.

In addition, provided is an immersion cooling module that increases cooling efficiency of the entire interior of a housing by cooling fluid by appropriately controlling the flow amount and flow speed according to the flow direction and location of the cooling fluid within the housing.

In order to achieve the above objectives, according to a general aspect of the present disclosure, there is provided an immersion cooling module including: a housing in which an inlet for cooling fluid to flow in and an outlet for cooling fluid to flow out are formed, and in which the cooling fluid is accommodated at a predetermined level so as to form an upper space; a cooling chamber coupled to a lower end of the housing, and configured to have a chamber inlet through which the cooling fluid flows in and a chamber outlet through which the cooling fluid is discharged; battery cells spaced apart from each other and at least partially immersed in the cooling fluid; and cooling fluid passage parts respectively formed in cooling spaces divided by the battery cells, wherein heat transfer members are arranged at predetermined intervals in a direction perpendicular to a flow direction of the cooling fluid, wherein each of the heat transfer members may be formed such that a portion of a first side thereof is accommodated in the cooling chamber and a portion of a second side thereof is exposed to the upper space of the housing.

In an embodiment, the cooling fluid passage parts may respectively include a plurality of heat transfer members.

In an embodiment, the heat transfer members may respectively show a circular or polygonal cross-sectional shape.

In an embodiment, the heat transfer members may be formed in a cylindrical shape, respectively.

In an embodiment, the predetermined intervals of the heat transfer members included in the cooling fluid passage parts may gradually decrease from the inlet toward the outlet of the housing.

In a further embodiment, the module may further include: an upper inlet formed on a first side of the upper space of the housing; and an upper outlet formed on a second side of the upper space of the housing, wherein the upper inlet and the upper outlet may be adapted to allow for flow in and discharge of a cooling gas, respectively, so that the upper space of the housing is fillable with the cooling gas, and/or a second end of each of the heat transfer members is coolable.

In a further embodiment, the cooling fluid passage parts may be formed in spaces partitioned by the battery cells from the inlet of the housing into a first cooling fluid passage part, a second cooling fluid passage part, and a third cooling fluid passage part, wherein when a spacing between the heat transfer members in the first cooling fluid passage part is denoted as *a,* a spacing between the heat transfer members in the second cooling fluid passage part is denoted as *b,* and a spacing between the heat transfer members in the third cooling fluid passage part is denoted as *c,* sizes of the spacings may satisfy *a > b > c.*

In an embodiment, each of the cooling fluid passage parts may comprise, optionally may be composed of, a plurality of heat transfer members. Preferably, a diameter of the heat transfer member at each end of the cooling fluid passage part may be larger than a diameter of the heat transfer member at a center of the respective cooling fluid passage part.

In an embodiment, a spacing between the heat transfer members at each end of the cooling fluid passage part may be narrower than a spacing between the heat transfer members at the center of the respective cooling fluid passage part.

In an embodiment, a spacing between the heat transfer members arranged on a surface facing one side of each of the battery cells may be wider than a spacing between the heat transfer members arranged on a surface not facing each of the battery cells.

In an embodiment, the chamber inlet of the cooling chamber may be provided on a lower surface of the housing adjacent to the inlet of the housing, so that a cooling fluid flowing into the inlet may be allowed to flow into the cooling chamber.

According to another general aspect of the present disclosure, a cooling method may be provided, the method comprising: i) providing a housing that is configured to include an inlet and an outlet respectively allowing for flow in and flow out of a cooling fluid; ii) immersing, at least partially, one or more battery cells in the cooling fluid inside the housing; iii)providing a first cooling fluid passage part, a second cooling fluid passage part and, preferably, a third cooling fluid passage part, respectively comprising heat transfer members that are arranged at predetermined intervals in a direction perpendicular to a flow direction of the cooling fluid, wherein when a spacing between the heat transfer members in the first cooling fluid passage part is denoted as *a,* a spacing between the heat transfer members in the second cooling fluid passage part is denoted as *b,* and a spacing between the heat transfer members in the third cooling fluid passage part is denoted as *c,* sizes of the spacings satisfy *a > b > c.*

In an embodiment, a diameter of the heat transfer member at each end of the first, second, and/or third cooling fluid passage parts may be configured to be larger than a diameter of the heat transfer member at a center of the respective first, second, and/or third cooling fluid passage parts, and/or a spacing between the heat transfer members at each end of the first, second, and/or third cooling fluid passage parts may be configured to be narrower than a spacing between the heat transfer members at a center of the respective first, second, and/or third cooling fluid passage parts, and/or a spacing between the heat transfer members arranged on a surface facing one side of each of the battery cells may be configured to be wider than a spacing between the heat transfer members arranged on a surface not facing each of the battery cells.

In an embodiment, a cooling chamber may further be provided and may be arranged to be coupled to a lower end of the housing, the cooling chamber may comprise a chamber inlet and a chamber outlet which are respectively allowing for flow in and discharge of the cooling fluid. Preferably, the chamber inlet may be provided on a lower surface of the housing adjacent to the inlet of the housing, so that the cooling fluid entering the inlet may be allowed to flow into the cooling chamber.

In a further general aspect, an immersion cooling module as described herein may be used for controlling a flow direction of a cooling fluid and enhancing the cooling efficiency of the cooling fluid.

The features and advantages of the present disclosure will become more apparent from the following detailed description based on the accompanying drawings.

Prior to this, terms or words used in this specification and claims should not be construed in their usual, dictionary meaning, and should be interpreted with meaning and concept consistent with the technical idea of the present disclosure on the basis of the principle that the inventor can define terminology appropriately to explain his or her invention in the best way possible.

According to an embodiment of the present disclosure, cooling performance of a cooling fluid can be improved depending on the flow direction and location of the cooling fluid within the housing.

Furthermore, since a cooling fluid itself can be cooled in the flow direction of the cooling fluid within the housing, deterioration of cooling performance associated with the flow of the cooling fluid can be minimized, and thus the efficiency of battery cell cooling by the cooling fluid can be maximized.

Furthermore, by improving the cooling efficiency of battery cells within the housing, the operating performance and efficiency of devices employing the battery cells can be effectively enhanced, thereby contributing to a reduction in carbon emissions.

### BRIEF DESCRIPTION OF THE DRAWINGS

The above and other objectives, features, and advantages of the present disclosure will be more clearly understood from the following detailed description when taken in conjunction with the accompanying drawings, in which:
FIG. 1 is a side schematic view of an immersion cooling module according to an embodiment of the present disclosure;
FIG. 2 is a plan schematic view of an immersion cooling module according to an embodiment of the present disclosure;
FIG. 3 is a plan schematic view of an immersion cooling module according to a modified example of an embodiment of the present disclosure; and
FIG. 4 is a plan schematic view of an immersion cooling module according to another modified example of an embodiment of the present disclosure.

### DETAILED DESCRIPTION

Terms used to describe an embodiment of the present disclosure are not intended to limit the disclosure. It should be noted that singular expressions include plural expressions unless the context clearly dictates otherwise.

It should be noted that, in assigning reference numerals to components in the drawings, identical components are assigned the same reference numerals as much as possible even if they are shown in different drawings, and similar reference numbers are assigned to similar components.

The drawings may be schematic or exaggerated for the purpose of illustrating the embodiments. In this document, expressions such as "have", "may have", "include", or "may include" refer to the presence of the corresponding feature (e.g., a numerical value, function, operation, or component such as a part), and do not exclude the presence of additional features.

Terms such as "one", "other", "another", "first", "second", etc., are used to distinguish one component from another component, and the components are not limited by the terms.

Hereinafter, an embodiment of the present disclosure will be described in detail with reference to the attached drawings.

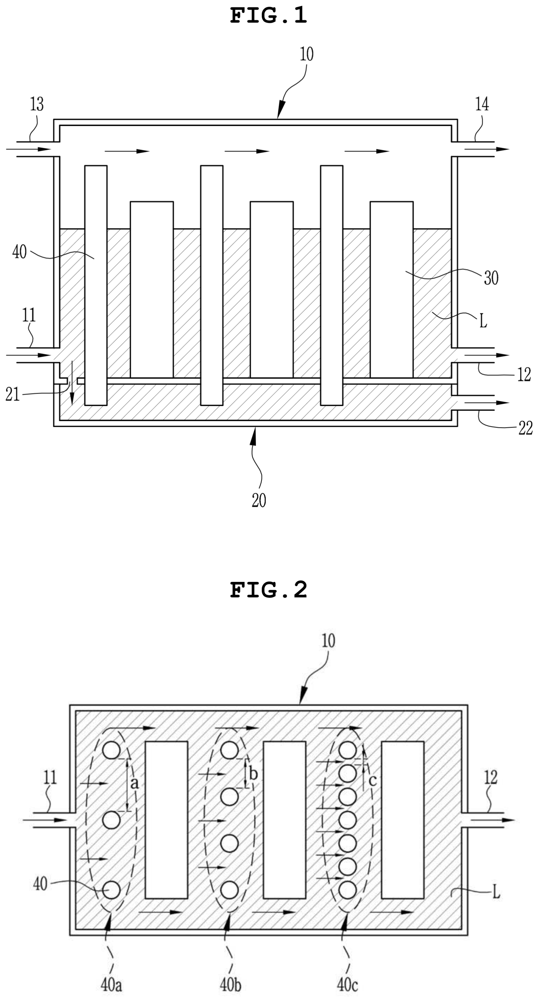

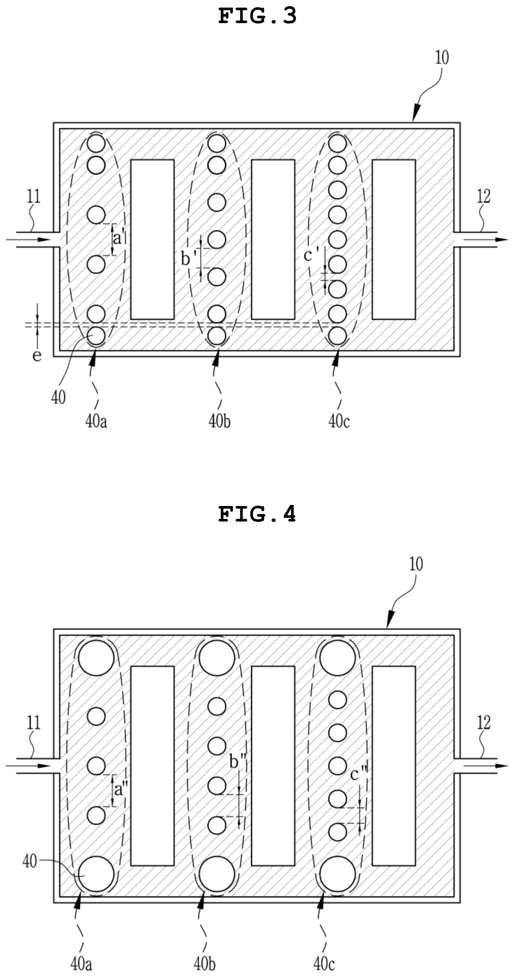

FIG. 1 is a side schematic view of an immersion cooling module according to an embodiment of the present disclosure; FIG. 2 is a plan schematic view of an immersion cooling module according to an embodiment of the present disclosure; FIG. 3 is a plan schematic view of an immersion cooling module according to a modified example of an embodiment of the present disclosure; and FIG. 4 is a plan schematic view of an immersion cooling module according to another modified example of an embodiment of the present disclosure.

An immersion cooling module according to an embodiment of the present disclosure may include: a housing 10 in which an inlet 11 for cooling fluid to flow in and an outlet 12 for cooling fluid to flow out are formed, and in which the cooling fluid is accommodated at a predetermined level so as to form an upper space; a cooling chamber 20 coupled to the lower end of the housing 10, and having a chamber inlet 21 through which the cooling fluid flows in and a chamber outlet 22 through which the cooling fluid is discharged; a plurality of battery cells 30 spaced apart from each other and immersed in the cooling fluid; and cooling fluid passage parts respectively formed in cooling spaces divided by the battery cells 30, wherein heat transfer members 40 are arranged at predetermined intervals in a direction perpendicular to the flow direction of the cooling fluid. The plurality of heat transfer members 40 may be formed such that a portion of one side is accommodated in the cooling chamber 20 and a portion of the other side is exposed to the upper space of the housing 10.

As shown in FIG. 1, the housing 10 may accommodate a cooling fluid at a predetermined level. The cooling fluid may be contained in the housing 10 at a level that leaves a predetermined space in the upper portion of the interior of the housing 10.

The cooling chamber 20 may be coupled to the lower end of the housing 10, or may be integrally formed with the housing 10 such that an internal space is separately defined.

The cooling chamber 20 is formed to be coupled to the lower surface of the housing 10 so that the cooling fluid flows separately, and may have the chamber inlet 21 through which cooling fluid flowing into the housing 10 flows in and the chamber outlet 22 through which cooling fluid flowing out of the cooling chamber 20 flows out.

The battery cells 30 may be at least partially immersed in a cooling fluid contained within the housing 10. The battery cells 30 are cooled by being, at least partially, immersed in the cooling fluid, and the plurality of battery cells 30 may be arranged at predetermined intervals. The gap spaces between the battery cells 30 may be configured to form a plurality of cooling spaces, each divided along the flow direction of the cooling fluid within the housing 10. That is, as shown in FIG. 1, the cooling spaces created by the gaps between the battery cells 30 may be sequentially formed along the direction in which the cooling fluid flows from the inlet 11 to the outlet 12 of the housing 10.

Within the cooling spaces defined by the battery cells 30, the heat transfer members 40 may be disposed at predetermined intervals along a plane perpendicular to the flow direction of the cooling fluid. By arranging the heat transfer members 40 in a direction perpendicular to the flow direction of the cooling fluid, the cooling fluid flows through the gaps between the heat transfer members 40. The cooling fluid passage part may include the plurality of heat transfer members 40 disposed in a cooling space created by the spaced-apart heat transfer members 40.

That is, the cooling fluid passage part is provided on a plane perpendicular to the direction of cooling fluid flow, and as the cooling fluid flows through the spaces between the heat transfer members 40 disposed in the cooling fluid passage part, the cooling fluid itself may be cooled by means of the heat transfer members 40 while flowing in direct contact with the heat transfer members 40 as described later.

Thus, a portion of one end of the heat transfer member 40 is submerged in the cooling chamber 20 described above and cooled, while a portion of the other end of the heat transfer member 40 is immersed in the cooling fluid inside the housing 10 and exposed to the upper space of the housing 10, allowing the heat transfer member 40 to be further cooled by a cooling gas flowing through the upper space of the housing 10. In addition, in the central portion of the heat transfer member 40, the cooling fluid is cooled through direct contact with the heat transfer member 40.

That is, an upper inlet 13 is formed on one side of the upper space inside the housing 10 and an upper outlet 14 is formed on the other side of the upper space inside the housing 10, and a cooling gas flows into the upper inlet 13 and flows toward the upper outlet 14, so that the other end of the heat transfer member 40 may be cooled.

As shown in FIG. 2, the heat transfer member 40 may be formed in a cylindrical shape. By being formed in a cylindrical shape, the contact area with the cooling fluid may be maximized and the resistance to the flow of the cooling fluid may be minimized. However, the heat transfer member 40 may also be formed in the shape of a triangular prism, rectangular prism, hexagonal prism or cone shape, for example. In another embodiment, the heat transfer members 40 included in the cooling fluid passage parts 40a, 40b, 40c may respectively show a circular or polygonal cross-sectional shape when viewed from a side cross-sectional view of the module.

As shown in FIG. 2, the cooling fluid passage parts may be formed sequentially in the flow direction of the cooling fluid within the housing 10. At this time, the predetermined intervals of the heat transfer members 40 in individual cooling fluid passage parts may be become narrower. For instance, the predetermined intervals of the heat transfer members 40 may be become narrower along a direction from the inlet 11 to the outlet 12 of the housing 10, i.e., may gradually decrease from the first cooling fluid passage part 40a to the second cooling fluid passage part 40b and/or third cooling fluid passage part 40c.

That is, as shown in FIG. 2, when the gap between the heat transfer members 40 of a first cooling fluid passage part 40a through which a cooling fluid flows when the cooling fluid enters the inlet 11 of the housing 10 is denoted as *a,* the gap between the heat transfer members 40 of a second cooling fluid passage part 40b is denoted as *b,* and the gap between the heat transfer members 40 of a third cooling fluid passage part 40c is denoted as *c,* the width of the gaps gradually narrows in the direction of *a, b,* and *c.*

By narrowing the gap width in the direction in which the cooling fluid flows, the flow rate of the cooling fluid passing through each cooling fluid passage may be controlled to increase gradually under the same flow amount and fluid pressure. By doing so, it is possible to minimize the decrease in cooling performance of the cooling fluid from the inlet 11 to the outlet 12 within the housing 10.

In this way, by adjusting the spacing between each of the heat transfer members 40 of the cooling fluid passage parts, the flow speed of the cooling fluid in each cooling space may be effectively controlled, thereby preventing deterioration of cooling performance of the cooling fluid, and significantly improving the overall cooling efficiency.

In addition, as described above, by cooling one end and the other end of the heat transfer member 40 that come into contact with a cooling fluid while the cooling fluid flows separately utilizing the cooling chamber 20 and the upper space inside the housing 10, the cooling fluid itself may be cooled again by means of the heat transfer member 40, thereby improving the cooling performance of the cooling fluid.

As shown in FIG. 3, the cooling fluid passage part is composed of the plurality of heat transfer members 40, and the gap between the heat transfer members 40 at opposite ends of the cooling fluid passage part may be formed to be narrower than the gap between the heat transfer members 40 at the center of the cooling fluid passage part.

That is, as shown, the spacing of the heat transfer members 40 located near opposite ends of the battery cell 30, or in regions beyond opposite ends of the battery cell 30, may be made narrower than the spacing of the heat transfer members 40 in the direction in which the cooling fluid flows along one side of the battery cell 30. By doing so, the cooling fluid may be guided to flow along one side of the battery cell 30, thereby improving the overall cooling efficiency.

As shown in FIG. 3, when the spacing of the heat transfer members 40 in the region facing the battery cell 30 in the first cooling fluid passage part 40a, that is, the region facing one side of the battery cell 30 is denoted as *a',* the spacing of the heat transfer members 40 in the region facing the battery cell 30 in the second cooling fluid passage part 40b, that is, the region facing one side of the battery cell 30 is denoted as b', and the spacing of the heat transfer members 40 in the region facing the battery cell 30 in the third cooling fluid passage part 40c, that is, the region facing one side of the battery cell 30 is denoted as *c',* the relationship *a' > b' > c'* can be established. As described above, this is intended to relatively adjust the flow speed of a cooling fluid as the cooling fluid flows through each cooling space.

In addition, in the area of each cooling space, by forming the gap between the heat transfer members 40 located near opposite ends of the battery cell 30, or in regions beyond opposite ends of the battery cell 30, with a width e smaller than *a', b',* and/or *c',* the flow of a cooling fluid may be naturally concentrated in the direction along one side of the battery cell 30 during the circulation of the cooling fluid.

As shown in FIG. 4, the first, second, and third cooling fluid passage parts 40a, 40b, 40c respectively comprise a plurality of heat transfer members 40, and the diameter of the heat transfer member 40 at each end of the battery cell 30 or in a region beyond each end of the battery cell 30 is relatively larger than the diameter of the heat transfer member 40 at the center of the cooling fluid passage part, that is, the region facing one side of the battery cell 30. Preferably, each of the first, second, and third cooling fluid passage parts 40a, 40b, 40c is composed of the plurality of heat transfer members 40, and the diameter of the heat transfer member 40 at each end of the battery cell 30 or in a region beyond each end of the battery cell 30 is formed to be relatively larger than the diameter of the heat transfer member 40 at the center of the cooling fluid passage part, that is, the region facing one side of the battery cell 30.

By increasing the diameter of the heat transfer member 40 at each end of the battery cell 30 or in a region beyond each end of the battery cell 30 with respect to the diameter of the heat transfer member 40 at the center of the respective first, second, and third cooling fluid passage part, the flow of a cooling fluid may be concentrated in the direction along one side of the battery cell 30 during the circulation of the cooling fluid. In addition, by adjusting the relative diameters of the heat transfer members 40, the contact area between the heat transfer members 40 and the cooling fluid may be increased, thereby further improving the efficiency of cooling the cooling fluid itself. For example, a ratio of the diameter of the heat transfer member 40 at each end of the battery cell 30 or in a region beyond each end of the battery cell 30 with respect to the diameter of the heat transfer member 40 at the center of each cooling fluid passage part may be in a range of more than or equal to 1.05, preferably more than or equal to 1.10, more preferably more than or equal to 1.15, while larger ratios in a range of 1.50 or more may also be implemented.

By doing so, cooling through contact with the battery cell 30 may be achieved in all directions in which the cooling fluid flows. In addition, through the region where the diameter of the cylindrical heat transfer member 40 is made relatively larger, it is possible to both control the flow direction of the cooling fluid and enhance the cooling efficiency of the fluid itself, thereby also improving the cooling efficiency of the cooling fluid that comes into contact with the battery cell 30.

Likewise in FIG. 4, when the spacing of the heat transfer members 40 in the region facing the battery cell 30 in the first cooling fluid passage part 40a, that is, the region facing one side of the battery cell 30 is denoted as *a",* the spacing of the heat transfer members 40 in the region facing the battery cell 30 in the second cooling fluid passage part 40b, that is, the region facing one side of the battery cell 30 is denoted as *b",* and the spacing of the heat transfer members 40 in the region facing the battery cell 30 in the third cooling fluid passage part 40c, that is, the region facing one side of the battery cell 30 is denoted as *c",* the relationship *a" > b" > c*" can be established. As described above, this is intended to relatively adjust the flow speed of a cooling fluid as the cooling fluid flows through each cooling space.

According to the present disclosure, a cooling method may comprise:
i) providing a housing 10, the housing 10 being configured to include an inlet 11 and an outlet 12 respectively allowing for flow in and flow out of a cooling fluid;
ii) immersing, at least partially, one or more battery cells 30 in the cooling fluid inside the housing 10;
iii) providing a first cooling fluid passage part 40a, a second cooling fluid passage part 40b and, preferably, a third cooling fluid passage part 40c, respectively comprising heat transfer members 40 that are arranged at predetermined intervals in a direction perpendicular to a flow direction of the cooling fluid. When a spacing between the heat transfer members 40 in the first cooling fluid passage part 40a is denoted as *a,* a spacing between the heat transfer members (40) in the second cooling fluid passage part 40b is denoted as *b,* and a spacing between the heat transfer members 40 in the third cooling fluid passage part 40c is denoted as *c,* sizes of the spacings satisfy *a > b > c.*

For example, a ratio a / b and/or a ratio b /c may be 1.05 or more, respectively.

In the above-described cooling method, a diameter of the heat transfer member 40 at each end of the first, second, and/or third cooling fluid passage parts 40a, 40b, 40c may be configured to be larger than a diameter of the heat transfer member 40 at a center of the respective first, second, and/or third cooling fluid passage parts 40a, 40b, 40c, and/or a spacing between the heat transfer members 40 at each end of the first, second, and/or third cooling fluid passage parts 40a, 40b, 40c may be configured to be narrower than a spacing between the heat transfer members 40 at a center of the respective first, second, and/or third cooling fluid passage parts 40a, 40b, 40c, and/or a spacing between the heat transfer members 40 arranged on a surface facing one side of each of the battery cells 30 may be configured to be wider than a spacing between the heat transfer members 40 arranged on a surface not facing each of the battery cells 30.

In addition, a cooling chamber 20 may further be provided and may be arranged to be coupled to a lower end of the housing 10. The cooling chamber 20 may include a chamber inlet 21 and a chamber outlet 22 which may respectively be allowing for flow in and discharge of the cooling fluid. Preferably, the chamber inlet 21 is provided on a lower surface of the housing 10 adj acent to the inlet 11 of the housing 10, so that the cooling fluid entering the inlet 11 is allowed to flow into the cooling chamber 20.

The above-described immersion cooling module may be used for controlling a flow direction of a cooling fluid and enhancing the cooling efficiency of the cooling fluid.

Above, the present disclosure has been described in detail through specific embodiments. The embodiments are for specifically explaining the present disclosure, and are only illustrative and do not limit the scope of the appended claims. It is obvious to those skilled in the art that various changes and modifications to the embodiments are possible within the scope and technical idea of the present disclosure, and it is natural that such changes and modifications fall within the scope of the appended claims.

## Claims

1. An immersion cooling module comprising:
a housing (10) in which an inlet (11) for cooling fluid to flow in and an outlet (12) for cooling fluid to flow out are formed, and in which the cooling fluid is accommodated at a predetermined level so as to form an upper space;
a cooling chamber (20) coupled to a lower end of the housing (10), and configured to have a chamber inlet (21) through which the cooling fluid flows in and a chamber outlet (22) through which the cooling fluid is discharged;
battery cells (30) spaced apart from each other and at least partially immersed in the cooling fluid; and
cooling fluid passage parts (40a, 40b, 40c) respectively formed in cooling spaces divided by the battery cells (30), wherein heat transfer members (40) are arranged at predetermined intervals in a direction perpendicular to a flow direction of the cooling fluid,
wherein each of the heat transfer members (40) is formed such that a portion of a first side thereof is accommodated in the cooling chamber (20) and a portion of a second side thereof is exposed to the upper space of the housing (10).

2. The module of claim 1, wherein the cooling fluid passage parts (40a, 40b, 40c) respectively include a plurality of heat transfer members (40).

3. The module of claim 1 or 2, wherein the heat transfer members (40) respectively show a circular or polygonal cross-sectional shape.

4. The module of one of claims 1 to 3, wherein the heat transfer members (40) are respectively formed in a cylindrical shape.

5. The module of one of claims 1 to 4, wherein the predetermined intervals of the heat transfer members (40) respectively included in the cooling fluid passage parts (40a, 40b, 40c) gradually decrease from the inlet (11) toward the outlet (12) of the housing (10).

6. The module of one of claims 1 to 5, further comprising:
an upper inlet (13) formed on a first side of the upper space of the housing (10); and
an upper outlet (14) formed on a second side of the upper space of the housing (10),
wherein the upper inlet (13) and the upper outlet (14) are respectively adapted to allow for flow in and discharge of a cooling gas, so that the upper space of the housing (10) is fillable with the cooling gas, and/or a second end of each of the heat transfer members (40) is coolable.

7. The module of one of claims 1 to 6, wherein the cooling fluid passage parts (40a, 40b, 40c) are formed in spaces partitioned by the battery cells (30) from the inlet (11) of the housing (10) into a first cooling fluid passage part (40a), a second cooling fluid passage part (40b), and a third cooling fluid passage part (40c),
wherein when a spacing between the heat transfer members (40) in the first cooling fluid passage part (40a) is denoted as *a,*
a spacing between the heat transfer members (40) in the second cooling fluid passage part (40b) is denoted as *b,* and
a spacing between the heat transfer members (40) in the third cooling fluid passage part (40c) is denoted as *c,*
sizes of the spacings satisfy *a > b > c.*

8. The module of one of claims 1 to 7, wherein each of the cooling fluid passage parts (40a, 40b, 40c) comprises, optionally is composed of, a plurality of heat transfer members (40),
preferably wherein a diameter of the heat transfer member (40) at each end of the cooling fluid passage part (40a, 40b, 40c) is larger than a diameter of the heat transfer member (40) at a center of the respective cooling fluid passage part (40a, 40b, 40c).

9. The module of one of claims 1 to 8, wherein a spacing between the heat transfer members (40) at each end of the cooling fluid passage part (40a, 40b, 40c) is narrower than a spacing between the heat transfer members (40) at a center of the respective cooling fluid passage part (40a, 40b, 40c).

10. The module of one of claims 1 to 9, wherein a spacing between the heat transfer members (40) arranged on a surface facing one side of each of the battery cells (30) is wider than a spacing between the heat transfer members (40) arranged on a surface not facing each of the battery cells (30).

11. The module of one of claims 1 to 10, wherein the chamber inlet (21) of the cooling chamber (20) is provided on a lower surface of the housing (10) adjacent to the inlet (11) of the housing (10), so that a cooling fluid flowing into the inlet (11) is allowed to flow into the cooling chamber (20).

12. A cooling method comprising:
i) providing a housing (10), the housing (10) being configured to include an inlet (11) and an outlet (12) respectively allowing for flow in and flow out of a cooling fluid;
ii) immersing, at least partially, one or more battery cells (30) in the cooling fluid inside the housing (10);
iii) providing a first cooling fluid passage part (40a), a second cooling fluid passage part (40b) and, preferably, a third cooling fluid passage part (40c), respectively comprising heat transfer members (40) that are arranged at predetermined intervals in a direction perpendicular to a flow direction of the cooling fluid,
wherein when a spacing between the heat transfer members (40) in the first cooling fluid passage part (40a) is denoted as *a,*
a spacing between the heat transfer members (40) in the second cooling fluid passage part (40b) is denoted as *b,* and
a spacing between the heat transfer members (40) in the third cooling fluid passage part (40c) is denoted as c,
sizes of the spacings satisfy *a > b > c.*

13. The method of claim 12, wherein a diameter of the heat transfer member (40) at each end of the first, second, and/or third cooling fluid passage parts (40a, 40b, 40c) is configured to be larger than a diameter of the heat transfer member (40) at a center of the respective first, second, and/or third cooling fluid passage parts (40a, 40b, 40c), and/or
wherein a spacing between the heat transfer members (40) at each end of the first, second, and/or third cooling fluid passage parts (40a, 40b, 40c) is configured to be narrower than a spacing between the heat transfer members (40) at a center of the respective first, second, and/or third cooling fluid passage parts (40a, 40b, 40c), and/or
wherein a spacing between the heat transfer members (40) arranged on a surface facing one side of each of the battery cells (30) is configured to be wider than a spacing between the heat transfer members (40) arranged on a surface not facing each of the battery cells (30).

14. The method of claim 12 or 13, wherein a cooling chamber (20) is further provided and arranged to be coupled to a lower end of the housing (10), the cooling chamber (20) comprising a chamber inlet (21) and a chamber outlet (22) which are respectively allowing for flow in and discharge of the cooling fluid,
preferably wherein the chamber inlet (21) is provided on a lower surface of the housing (10) adjacent to the inlet (11) of the housing (10), so that the cooling fluid entering the inlet (11) is allowed to flow into the cooling chamber (20).

15. Use of an immersion cooling module of one of claims 1 to 11 for controlling a flow direction of a cooling fluid and enhancing the cooling efficiency of the cooling fluid.
